# EUROPÄISCHE PATENTSCHRIFT

(11) **EP 0 754 732 B1**
(45) Veröffentlichungstag und Bekanntmachung des Hinweises auf die Patenterteilung: **16.08.2001**
(21) Anmeldenummer: 96810457.0
(22) Anmeldetag: 12.07.1996
(51) Int. Cl.: C09B 31/047, C09B 31/04, C09B 43/128, C09B 43/124

(54) **Azofarbstoffe, Verfahren zu deren Herstellung und deren Verwendung**
Azo dyes, process for their preparation and use thereof
Colorants azoiques, procédé pour leur préparation et leur utilisation

(30) Priorität: 21.07.1995 CH 215995
(43) Veröffentlichungstag der Anmeldung: 22.01.1997
(73) Patentinhaber: Ciba Specialty Chemicals Holding Inc., 4057 Basel (CH)
(72) Erfinder: Adam, Jean-Marie, Dr., 68300 Rosenau (FR); Sutter, Peter, 4132 Muttenz (CH)

(56) Entgegenhaltungen:
- EP-A- 0 595 768
- CH-A- 333 517
- FR-A- 1 198 990
- FR-A- 2 382 484

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

EP-A-595 768 und FR-A-2 382 484 offenbaren Disazo-Farbstoffe zum Farben von Polyamiden.

Gegenstand der vorliegenden Erfindung sind Azofarbstoffe der Formel 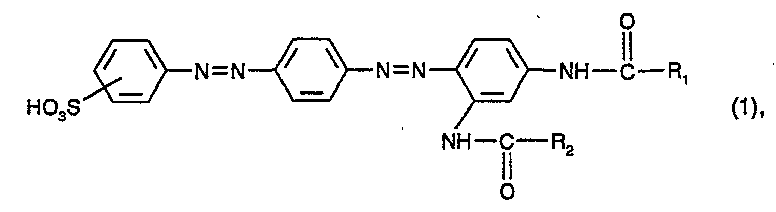 worin
R₁ und R₂ unabhängig voneinander gegebenenfalls durch Hydroxy, C₁-C₄-Alkoxy oder Halogen substituiertes C₁-C₄-Alkyl oder C₁-C₄-Alkoxy;
gegebenenfalls durch C₁-C₄-Alkyl, C₁-C₄-Alkoxy oder Halogen substituiertes Phenyl oder Phenoxy; oder
ein Rest der Formel -N(R₃)R₄ sind, wobei R₃ und R₄ unabhängig voneinander Wasserstoff, C₁-C₄-Alkyl oder gegebenenfalls im Alkylteil durch Hydroxy oder C₁-C₄-Alkoxy weitersubstituiertes C₂-C₄-Alkanoyl sind,
mit der Massgabe, dass R₁ und R₂ nicht gleichzeitig Methyl bedeuten.

Als C₁-C₄-Alkyl kommen für R₁, R₂, R₃ und R₄ unabhängig voneinander z.B. Methyl, Äthyl, Propyl, Isopropyl, Butyl, sek.-Butyl, tert.-Butyl oder Isobutyl, insbesondere Methyl oder Aethyl, in Betracht. Die Reste R₁ und R₂ in der Bedeutung als C₁-C₄-Alkyl können durch Hydroxy, Halogen wie z.B. Brom oder vorzugsweise Chlor, oder insbesondere durch C₁-C₄-Alkoxy, wie z.B. Aethoxy oder vorzugsweise Methoxy, weitersubstituiert sein. Als Beispiel für entsprechende substituierte Reste sei der Methoxymethylrest genannt.

Als C₁-C₄-Alkoxy kommen für R₁ und R₂ unabhängig voneinander z.B. Methoxy, Äthoxy, Propoxy, Isopropoxy, Butoxy oder Isobutoxy, insbesondere Methoxy oder vorzugsweise Aethoxy, in Betracht. Die Reste R₁ und R₂ in der Bedeutung als C₁-C₄-Alkoxy können durch Hydroxy, Halogen wie z.B. Brom oder vorzugsweise Chlor, oder insbesondere durch C₁-C₄-Alkoxy, wie z.B. Methoxy oder Aethoxy, weitersubstituiert sein. Bevorzugt sind die entsprechenden unsubstituierten Reste.

Als C₂-C₄-Alkanoyl kommen für R₃ und R₄ unabhängig voneinander z.B. Propionyl oder insbesondere Acetyl in Betracht. Die Reste R₃ und R₄ können in der Bedeutung als C₂-C₄-Alkanoyl durch Hydroxy oder insbesondere C₁-C₄-Alkoxy, wie z.B. Methoxy oder Aethoxy, weitersubstituiert sein. Vorzugsweise sind diese Reste durch C₁-C₄-Alkoxy, insbesondere durch Methoxy, weitersubstituiert. Besonders bevorzugt ist hierbei Methoxyacetyl.

Als Phenyl oder Phenoxy kommen für R₁ und R₂ neben den entsprechenden unsubstituierten Resten die durch C₁-C₄-Alkyl, wie Methyl, Äthyl, Propyl, Isopropyl, Butyl, sek.-Butyl, tert.-Butyl oder Isobutyl, C₁-C₄-Alkoxy, wie z.B. Methoxy, Äthoxy, Propoxy, lsopropoxy, Butoxy oder lsobutoxy, oder durch Halogen, wie z.B. Fluor, Brom oder insbesondere Chlor, substituierten Reste in Betracht. Bevorzugt sind hierbei die entsprechenden Phenylreste.

R₃ ist bevorzugt Wasserstoff oder C₁-C₄-Alkyl, insbesondere Wasserstoff.

R₄ ist bevorzugt Wasserstoff, C₁-C₄-Alkyl oder gegebenenfalls im Alkylteil durch C₁-C₄-Alkoxy weitersubstituiertes C₂-C₄-Alkanoyl, insbesondere Wasserstoff oder im Alkylteil durch C₁-C₄-Alkoxy weitersubstituiertes C₂-C₄-Alkanoyl. Besonders bevorzugt ist R₄ Wasserstoff oder Methoxyacetyl, insbesondere Wasserstoff.

Ganz besonders bevorzugt sind R₃ und R₄ Wasserstoff.

R₁ ist vorzugsweise gegebenenfalls durch Hydroxy, C₁-C₄-Alkoxy oder Halogen substituiertes C₁-C₄-Alkyl oder C₁-C₄-Alkoxy; oder ein Rest der Formel -N(R₃)R₄, wobei für R₃ und R₄ die oben angegebenen Bedeutungen und Bevorzugungen gelten. Vorzugsweise sind hierbei R₃ Wasserstoff und R₄ Wasserstoff oder im Alkylteil durch C₁-C₄-Alkoxy weitersubstituiertes C₂-C₄-Alkanoyl, insbesondere Wasserstoff.

Bevorzugt ist R₁ C₁-C₄-Alkoxy; gegebenenfalls durch C₁-C₄-Alkoxy substituiertes C₁-C₄-Alkyl; oder ein Rest der Formel -N(R₃)R₄, wobei für R₃ und R₄ die oben angegebenen Bedeutungen und Bevorzugungen gelten. Vorzugsweise sind hierbei R₃ Wasserstoff und R₄ Wasserstoff oder im Alkylteil durch C₁-C₄-Alkoxy weitersubstituiertes C₂-C₄-Alkanoyl, insbesondere Wasserstoff.

Besonders bevorzugt ist R₁ Methyl; Aethyl; Methoxy; Aethoxy; durch Methoxy oder Aethoxy substituiertes Methyl; oder Amino.

Ganz besonders bevorzugt ist R₁ Methyl; Aethyl; Aethoxy; durch Methoxy substituiertes Methyl; oder Amino. Vorzugsweise ist R₁ Methyl; Aethyl; Aethoxy; oder durch Methoxy substituiertes Methyl, insbesondere Methyl.

Für den Rest R₂ gelten die oben für den Rest R₁ angegebenen Bevorzugungen, wobei die Bedeutung als Aethyl ganz besonders bevorzugt ist.

Vorzugsweise sind R₁ und R₂ unabhängig voneinander gegebenenfalls durch Hydroxy, C₁-C₄-Alkoxy oder Halogen substituiertes C₁-C₄-Alkyl oder C₁-C₄-Alkoxy; oder ein Rest der Formel -N(R₃)R₄, wobei R₃ Wasserstoff und R₄ Wasserstoff oder im Alkylteil durch C₁-C₄-Alkoxy weitersubstituiertes C₂-C₄-Alkanoyl, insbesondere Wasserstoff, ist.

Bevorzugt sind R₁ und R₂ unabhängig voneinander C₁-C₄-Alkoxy; gegebenenfalls durch C₁-C₄-Alkoxy substituiertes C₁-C₄-Alkyl; oder Amino.

Besonders bevorzugt sind R₁ und R₂ unabhängig voneinander Methyl; Aethyl; Methoxy; Aethoxy; durch Methoxy oder Aethoxy substituiertes Methyl; oder Amino.

Ganz besonders bevorzugt sind R₁ und R₂ unabhängig voneinander Methyl; Aethyl; Aethoxy; durch Methoxy substituiertes Methyl; oder Amino, insbesondere Methyl; Aethyl; Aethoxy; oder durch Methoxy substituiertes Methyl.

Von besonderem Interesse sind Azofarbstoffe der Formel (1), worin R₁ Methyl und R₂ Aethyl ist.

Die Sulfogruppe in den Azofarbstoffen der Formel (1) ist vorzugsweise in para-Stellung, relativ zur Azogruppe, gebunden.

Gegenstand der vorliegenden Erfindung ist ferner ein Verfahren zur Herstellung von Azofarbstoffen der Formel (1), welches dadurch gekennzeichnet ist, dass man ein Amin der Formel 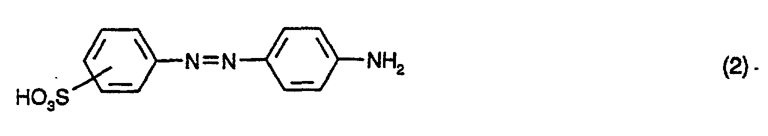 diazotiert, auf eine Kupplungskomponente der Formel 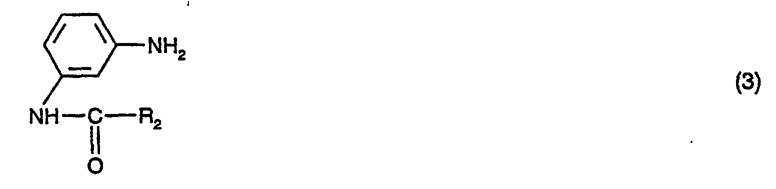 kuppelt und das erhaltene Reaktionsprodukt mit einer den Rest der Formel 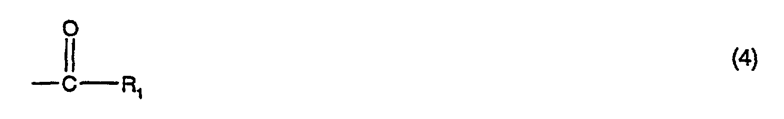 einführenden Verbindung umsetzt, wobei R₁ und R₂ die oben unter Formel (1) angegebenen Bedeutungen haben.

Die Diazotierung der Verbindung der Formel (2) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei 0 bis 10°C.

Die Kupplung auf die Kupplungskomponente der Formel (3) erfolgt in an sich bekannter Weise, bei sauren, neutralen bis schwach alkalischen pH-Werten, z.B. einem pH-Wert von 3 bis 7, und Temperaturen von beispielsweise -5 bis 30°C, vorzugsweise 0 bis 25°C.

Zur Einführung des Restes der Formel (4) können beispielsweise Verbindungen der Formel 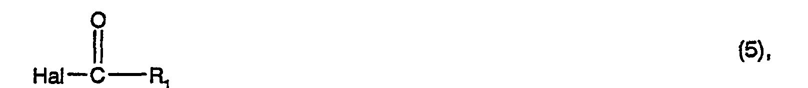 worin Hal Halogen, wie Chlor, Brom oder Jod, insbesondere Chlor, bedeutet, verwendet werden. Als Beispiele für Verbindungen der Formel (5) seien Acetylchlorid, Propionylchlorid, Methoxyacetylchlorid sowie Chlorameisensäure-äthylester genannt. Als weitere Beispiele für den Rest der Formel (4) einführende Verbindungen seien Essigsäureanhydrid und Propionsäureanhydrid genannt.

Die Einführung des Restes der oben genannten Formel (4) kann z.B. in dipolaren aprotischen Lösungsmitteln, wie z.B. Dimethylformamid oder Dimethylsulfoxid, oder in Wasser oder vorzugsweise in Pyridin erfolgen, bei einer Temperatur von beispielsweise 10 bis 80°C, insbesondere 10 bis 50°C.

In dem erfindungsgemässen Verfahren zur Herstellung der Azofarbstoffe der Formel (1) gelten für die Substituenten der Verbindungen der Formeln (2), (3), (4) und (5) die oben angegebenen Bevorzugungen.

Die Verbindungen der Formeln (2), (3) und (5) sind bekannt oder können in Analogie zu bekannten Verbindungen hergestellt werden.

Die Azofarbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide und insbesondere Wolle und synthetischen Polyamiden. Bevorzugt ist das Färben oder Bedrucken von natürlichen oder synthetischen Polyamidfasermaterialien. Die erfindungsgemässen Azofarbstoffe der Formel (1) können in allgemein üblicher, gegebenenfalls zuvor aufbereiteter Form zum Färben oder Bedrucken verwendet werden. Man erhält egale Färbungen mit guten Allgemeinechtheiten, insbesondere guter Reib-, Nass-, Nassreib- und Lichtechtheit. Femer sind die erfindungsgemässen Farbstoffe gut wasserlöslich und gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 22,2 Teile 4-Aminoazobenzol-4'-sulfonsäure werden bei einer Temperatur von 75°C in 400 Teilen Wasser gelöst und mit 20 Teilen einer 4-normalen Natriumnitritlösung versetzt. Die Lösung wird innerhalb von 20 Minuten bei einer Temperatur von 0 bis 5°C auf 400 Teile Eis und 20 Teile konzentrierter Salzsäure getropft. Die so erhaltene braune Suspension wird eine Stunde gerührt und anschliessend wird der pH mit einer Natriumcarbonatlösung (10%) auf einen Wert von 4 gestellt. Die Diazosuspension wird dann innerhalb von 60 Minuten bei einer Temperatur von 0 bis 5°C auf eine Kupplungslösung getropft, welche 150 Teile 3-Amino-phenylhamstoff-hydrochlorid in 400 Teilen Wasser und 63,5 Teilen 1-normaler Natriumhydroxidlösung enthält. Während der Kupplung wird der pH bei einem Wert von 5 gehalten. Man lässt 2 Stunden bei einer Temperatur von 0 bis 5°C und dann über Nacht bei Raumtemperatur ausreagieren. Die braune Suspension wird abfiltriert und mit Wasser gewaschen. Anschliessend wird der feuchte Rückstand mit 1000 Teilen Wasser verrührt und der pH mit 67 Teilen 1-normaler Natriumhydroxidlösung auf einen Wert von 8 gestellt. Bei einer Temperatur von 60°C werden 70 Teile Natriumchlorid hinzugegeben und die feine Suspension wird bei einer Temperatur von 50°C abfiltriert. Nach Trocknung erhält man eine Verbindung, welche in Form der freien Säure der Formel 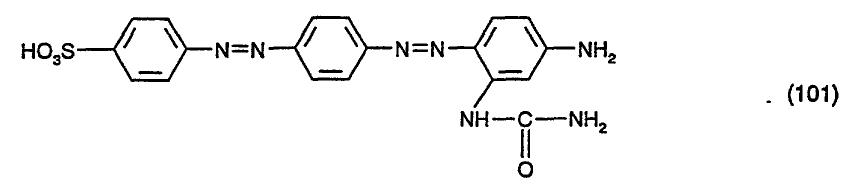 entspricht.

Beispiele 2 bis 4: In analoger Weise zu den Angaben in Beispiel 1 können die Verbindungen der Formeln 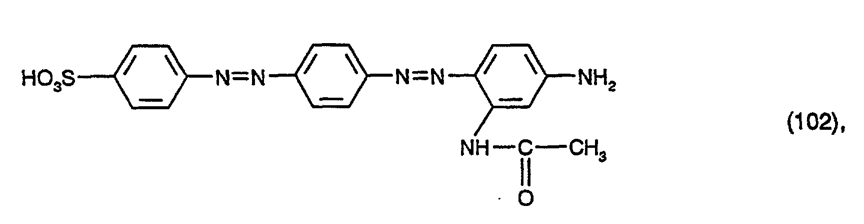 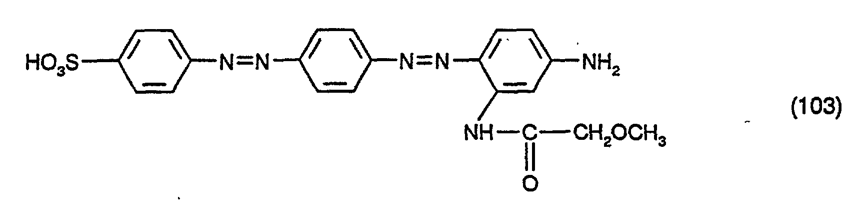 und 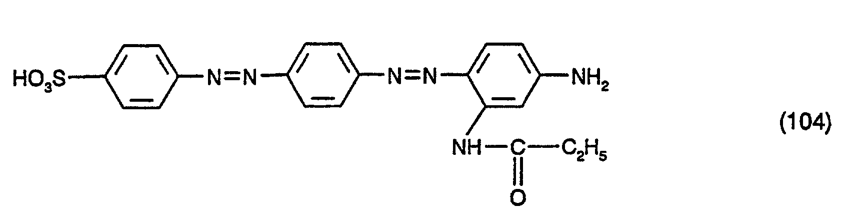 erhalten werden.

Beispiel 5: Es werden 6,6 Teile der Verbindung der Formel (104) in 150 Teilen Pyridin verrührt und innerhalb von 10 Minuten 5,9 Teile Acetylchlorid zugetropft, wobei die Temperatur bis auf 45°C ansteigt. Man rührt eine Stunde nach und gibt anschliessend 50 Teile Methanol zur Reaktionsmischung. Die orangefarbene Suspension wird auf 750 Teile einer konzentrierten wässrigen Natriumchloridlösung ausgetragen, abfiltriert und mit einer 5%-igen wässrigen Natriumchloridlösung sowie mit Methanol gewaschen. Nach dem Trocknen erhält man einen Farbstoff, welcher in Form der freien Säure der Verbindung der Formel 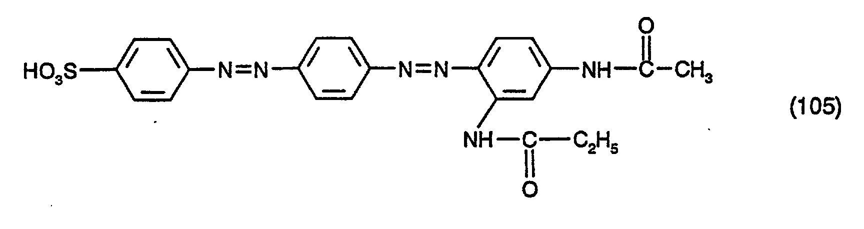 entspricht. Der Farbstoff der Formel (105) färbt Wolle und Polyamid in orangen Farbtönen.

Beispiele 6 bis 14: Verfährt man wie in Beispiel 5 angegeben, verwendet jedoch gegebenenfalls anstelle von 6,6 Teilen der Verbindung der Formel (104) eine äquimolare Menge einer der Verbindungen der Formeln (101), (102) und (103), sowie gegebenenfalls anstelle von 5,9 Teilen Acetylchlorid eine äquimolare Menge Propionylchlorid oder Methoxyacetylchlorid, so erhält man die in Form der freien Säure angegebenen Farbstoffe der Formeln 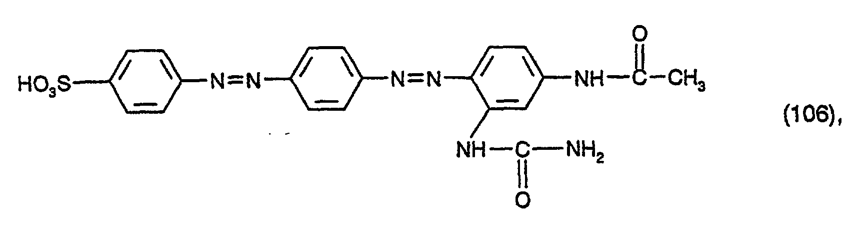 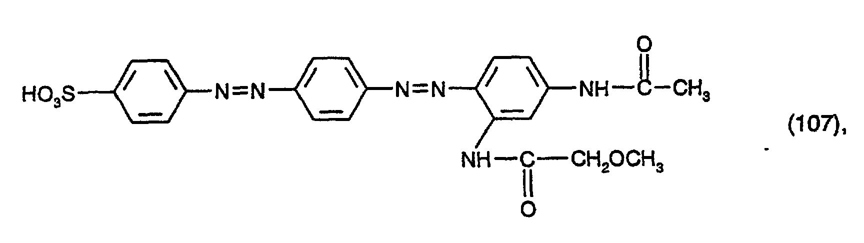 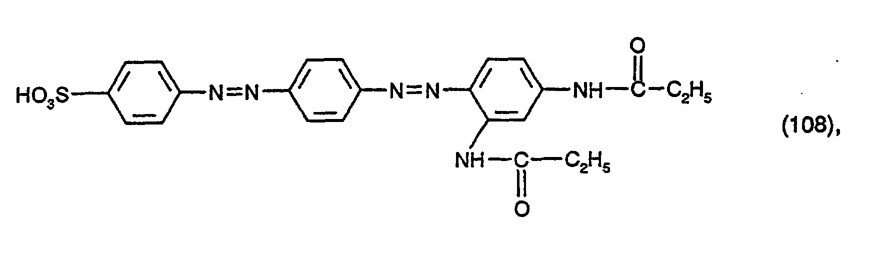 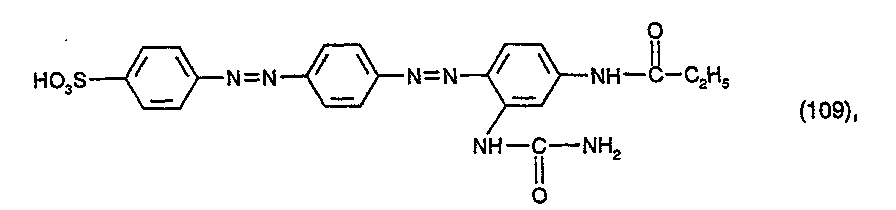 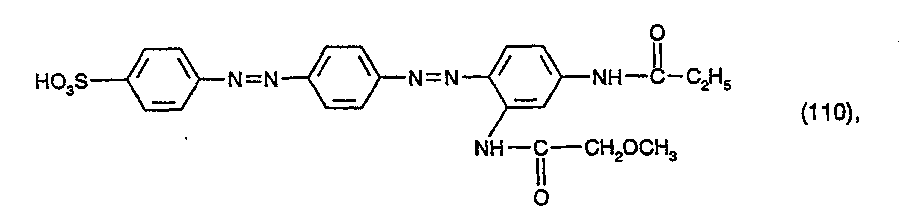 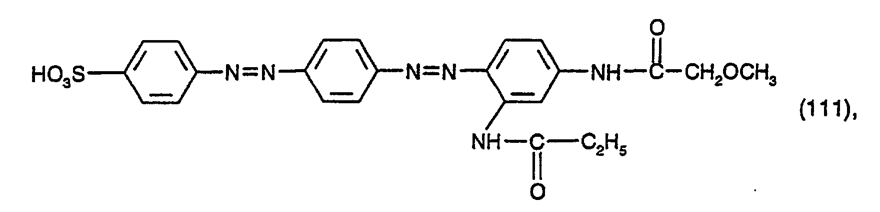 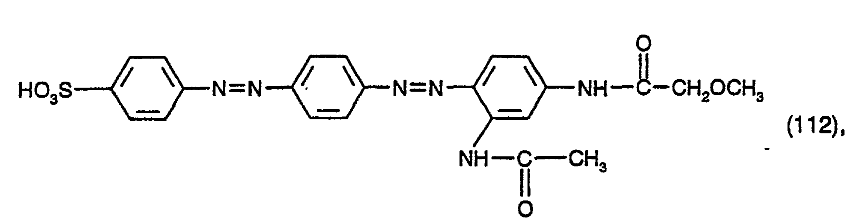 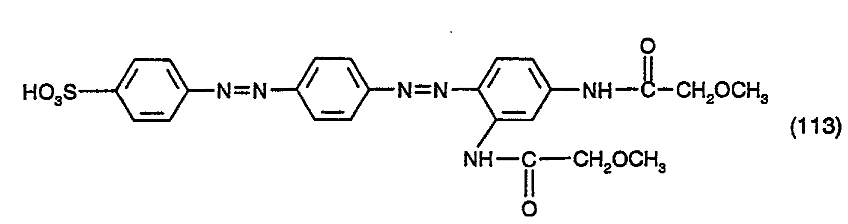 und

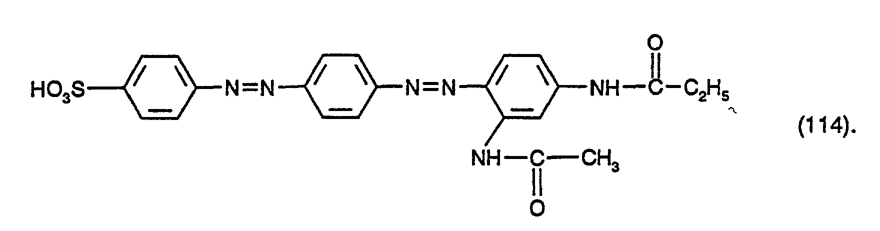

Die Farbstoffe der Formeln (106) bis (114) färben Wolle und Polyamid in orangen Farbtönen.

Beispiel 15: Verfährt man wie in Beispiel 5 angegeben, verwendet jedoch anstelle von 6,6 Teilen der Verbindung der Formel (104) eine äquimolare Menge der Verbindung der Formel (101) und anstelle von 5,9 Teilen Acetylchlorid eine äquimolare Menge Methoxyacetylchlorid, so erhält man einen Farbstoff, welcher in Form der freien Säure der Verbindung der Formel 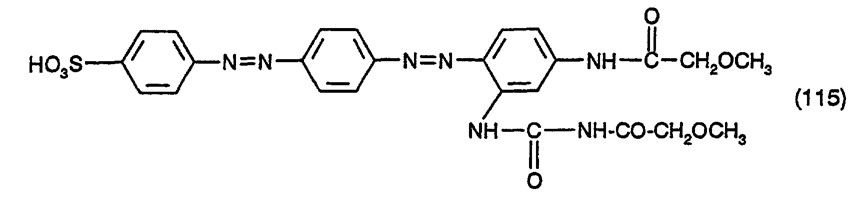 entspricht. Der Farbstoff der Formel (115) färbt Wolle und Polyamid in orangen Farbtönen.

Beispiel 16: Es werden 4,4 Teile der Verbindung der Formel (102) in 50 Teilen Pyridin bei einer Temperatur von 80°C verrührt. Bei einer Temperatur von 25°C werden anschliessend innerhalb von 10 Minuten 6,5 Teile Chlorameisensäure-äthylester zugetropft, wobei die Temperatur bis auf 42°C ansteigt. Man rührt eine Stunde bei dieser Temperatur nach und gibt anschliessend bei Raumtemperatur 75 Teile Methanol und 25 Teile einer 25%-igen wässrigen Natriumchloridlösung zur Reaktionsmischung. Die Suspension wird abfiltriert und mit einer 10%-igen wässrigen Natriumchloridlösung sowie mit Methanol gewaschen. Anschliessend wird der feuchte Rückstand aus einem Gemisch von Alkohol und Wasser im Verhältnis 1:1 umkristallisiert. Nach dem Trocknen erhält man 2,8 Teile eines Farbstoffes, welcher in Form der freien Säure der Verbindung der Formel 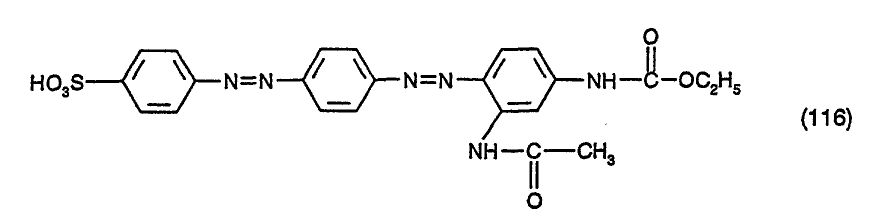 entspricht. Der Farbstoff der Formel (116) färbt Wolle und Polyamid in orangen Farbtönen.

Beispiele 17 bis 19: Verfährt man wie in Beispiel 16 angegeben, verwendet jedoch anstelle von 4,4 Teilen der Verbindung der Formel (102) eine äquimolare Menge einer der Verbindungen der Formeln (101), (103) und (104), so erhält man die in Form der freien Säure angegebenen Farbstoffe der Formeln 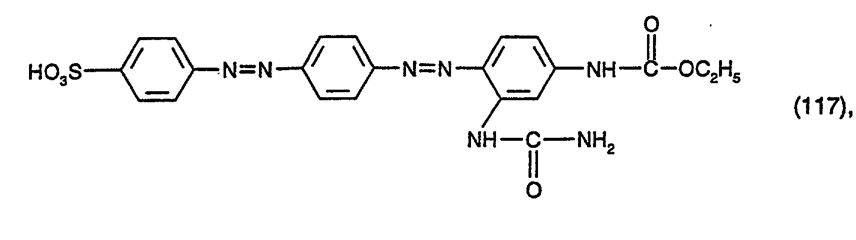 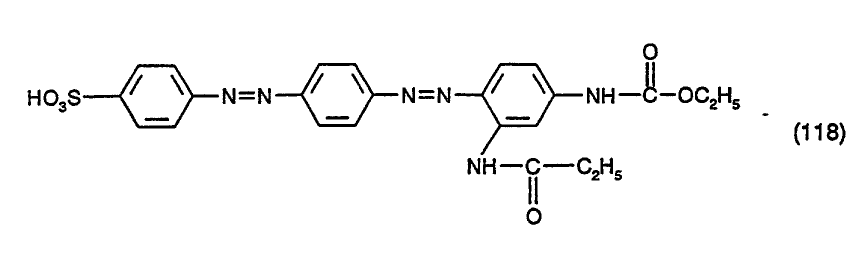 und

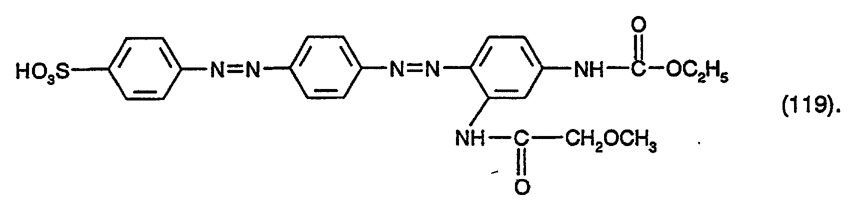

Die Farbstoffe der Formeln (117), (118) und (119) färben Wolle und Polyamid in orangen Farbtönen.

Beispiel 20: Es werden 4,4 Teile der Verbindung der Formel (102) in 70 Teilen Wasser bei Raumtemperatur verrührt und mit 3 Teilen Triethylamin und 10 Teilen Aceton versetzt. Zur orangen Lösung werden innerhalb von 10 Minuten 5,7 Teile Chlorameisensäuremethylester getropft, wobei die Temperatur auf 32°C ansteigt. Der pH wird hierbei durch Zugabe einer wässrigen, 1-normalen Natriumhydroxidlösung bei einem Wert von 7 gehalten. Nach Zugabe von 20 Teilen Aceton wird 30 Minuten gerührt und es werden anschliessend 50 Teile Methanol zugegeben. Anschliessend wird 20 Minuten gerührt, das Produkt abfiltriert und nacheinander mit 40 Teilen einer 5%-igen Natriumchloridlösung, 50 Teilen Äthanol und 20 Teilen Methanol gewaschen. Nach dem Trocknen erhält man 4 Teile eines Farbstoffes, welcher in Form der freien Säure der Verbindung der Formel 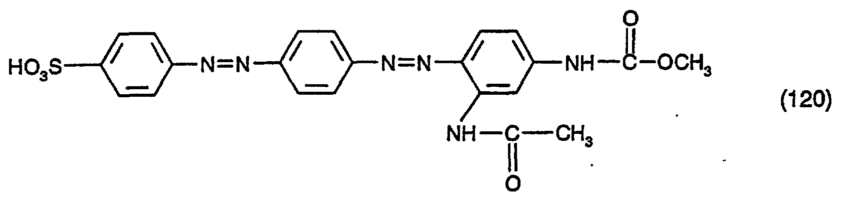 entspricht. Der Farbstoff der Formel (120) färbt Wolle und Polyamid in orangen Farbtönen.

Beispiele 21 und 22: Verfährt man wie in Beispiel 20 angegeben, verwendet jedoch anstelle von 4,4 Teilen der Verbindung der Formel (102) eine äquimolare Menge einer der Verbindungen der Formeln (101) und (104), so erhält man die in Form der freien Säure angegebenen Farbstoffe der Formeln

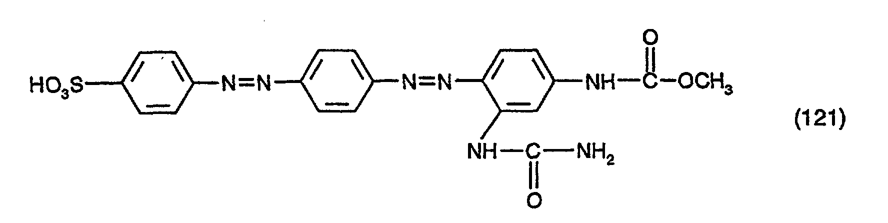

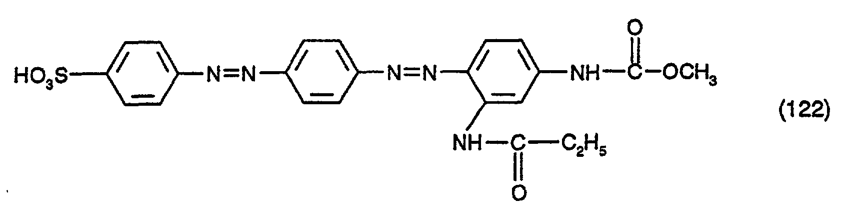

Die Farbstoffe der Formeln (121) und (122) färben Wolle und Polyamid in orangen Farbtönen.

Färbebeispiel: Zu 2000 Teilen entmineralisiertem Wasser wird bei Raumtemperatur 1 Teil eines Egalisierhilfsmittels (basierend auf dem Kondensationsprodukt aus einem höheren aliphatischen Amin und Aethylenoxid) gegeben. Anschliessend wird das Bad mit Essigsäure auf einen pH-Wert von 6 gestellt. Dann gibt man 0,5 Teile des Farbstoffs der Formel (105) gemäss Beispiel 5 zu. In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem orangen Farbton gefärbtes Gewebe.

## Patentansprüche

1. Azofarbstoffe der Formel 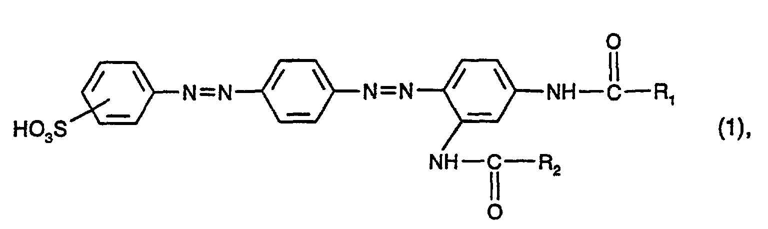 worin
R₁ und R₂ unabhängig voneinander gegebenenfalls durch Hydroxy, C₁-C₄-Alkoxy oder Halogen substituiertes C₁-C₄-Alkyl oder C₁-C₄-Alkoxy;
gegebenenfalls durch C₁-C₄-Alkyl, C₁-C₄-Alkoxy oder Halogen substituiertes Phenyl oder Phenoxy; oder
ein Rest der Formel -N(R₃)R₄ sind, wobei R₃ und R₄ unabhängig voneinander Wasserstoff, C₁-C₄-Alkyl oder gegebenenfalls im Alkylteil durch Hydroxy oder C₁-C₄-Alkoxy weitersubstituiertes C₂-C₄-Alkanoyl sind,
mit der Massgabe, dass R₁ und R₂ nicht gleichzeitig Methyl bedeuten.

2. Azofarbstoffe gemäss Anspruch 1, dadurch gekennzeichnet, dass R₃ Wasserstoff ist.

3. Azofarbstoffe gemäss einem der Ansprüche 1 und 2, dadurch gekennzeichnet, dass R₄ Wasserstoff oder im Alkylteil durch C₁-C₄-Alkoxy weitersubstituiertes C₂-C₄-Alkanoyl ist.

4. Azofarbstoffe gemäss einem der Ansprüche 1 bis 3, dadurch gekennzeichnet, dass R₃ und R₄ Wasserstoff sind.

5. Azofarbstoffe gemäss einem der Ansprüche 1 bis 3, dadurch gekennzeichnet, dass R₁ und R₂ unabhängig voneinander gegebenenfalls durch Hydroxy, C₁-C₄-Alkoxy oder Halogen substituiertes C₁-C₄-Alkyl oder C₁-C₄-Alkoxy; oder
ein Rest der Formel -N(R₃)R₄ sind, wobei R₃ Wasserstoff und R₄ Wasserstoff oder im Alkylteil durch C₁-C₄-Alkoxy weitersubstituiertes C₂-C₄-Alkanoyl ist.

6. Azofarbstoffe gemäss einem der Ansprüche 1 bis 5, dadurch gekennzeichnet, dass R₁ und R₂ unabhängig voneinander C₁-C₄-Alkoxy; gegebenenfalls durch C₁-C₄-Alkoxy substituiertes C₁-C₄-Alkyl; oder Amino sind.

7. Azofarbstoffe gemäss einem der Ansprüche 1 bis 6, dadurch gekennzeichnet, dass R₁ und R₂ unabhängig voneinander Methyl; Aethyl; Methoxy; Aethoxy; durch Methoxy oder Aethoxy substituiertes Methyl; oder Amino sind.

8. Azofarbstoffe gemäss einem der Ansprüche 1 bis 7, dadurch gekennzeichnet, dass R₁ und R₂ unabhängig voneinander Methyl; Aethyl; Aethoxy; durch Methoxy substituiertes Methyl; oder Amino sind.

9. Azofarbstoffe gemäss einem der Ansprüche 1 bis 8, dadurch gekennzeichnet, dass R₁ und R₂ unabhängig voneinander Methyl; Aethyl; Aethoxy; oder durch Methoxy substituiertes Methyl sind.

10. Azofarbstoffe gemäss einem der Ansprüche 1 bis 9, dadurch gekennzeichnet, dass R₁ Methyl und R₂ Aethyl ist.

11. Azofarbstoffe gemäss einem der Ansprüche 1 bis 10, dadurch gekennzeichnet, dass die Sulfogruppe in den Azofarbstoffen der Formel (1) in para-Stellung, relativ zur Azogruppe, gebunden ist.

12. Verfahren zur Herstellung von Azofarbstoffen gemäss Anspruch 1, dadurch gekennzeichnet, dass man ein Amin der Formel 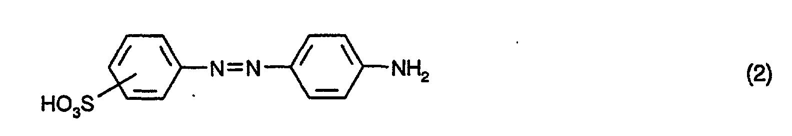 diazotiert, auf eine Kupplungskomponente der Formel 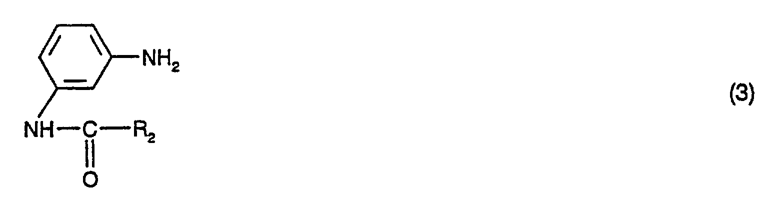 kuppelt und das erhaltene Reaktionsprodukt mit einer den Rest der Formel 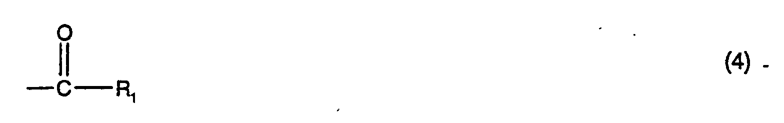 einführenden Verbindung umsetzt, wobei R₁ und R₂ die in Anspruch 1 angegebenen Bedeutungen haben.

13. Verwendung der Azofarbstoffe gemäss den Ansprüchen 1 bis 11 bzw. der gemäss Anspruch 12 erhaltenen Azofarbstoffe zum Färben oder Bedrucken von stickstoffhaltigen oder hydroxygruppenhaltigen Fasermaterialien.

14. Verwendung gemäss Anspruch 13 zum Färben oder Bedrucken von natürlichen oder synthetischen Polyamidfasermaterialien.

## Claims

1. An azo dye of the formula 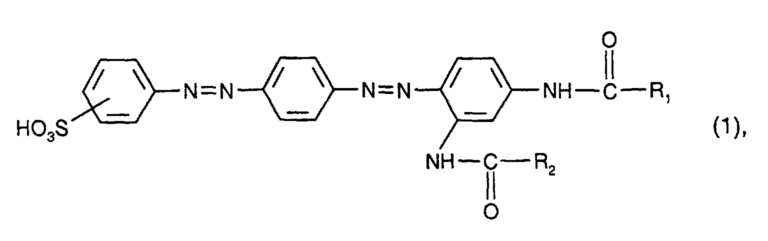 in which
R₁ and R₂ independently of one another are unsubstituted or hydroxy-, C₁-C₄-alkoxy- or halogen-substituted C₁-C₄-alkyl or C₁-C₄-alkoxy;
unsubstituted or C₁-C₄-alkyl-, C₁-C₄-alkoxy- or halogen-substituted phenyl or phenoxy; or a radical of the formula -N(R₃)R₄, in which R₃ und R₄ independently of one another are hydrogen, C₁-C₄-alkyl, or C₂-C₄-alkanoyl which is unsubstituted or further substituted in the alkyl part by hydroxyl or C₁-C₄-alkoxy,
with the proviso that R₁ and R₂ are not simultaneously methyl.

2. An azo dye according to claim 1, in which R₃ is hydrogen.

3. An azo dye according to any one of claims 1 and 2, in which R₄ is hydrogen, or C₂-C₄-alkanoyl which is further substituted in the alkyl part by C₁-C₄-alkoxy.

4. An azo dye according to any one of claims 1 to 3, in which R₃ and R₄ are hydrogen.

5. An azo dye according to any one of claims 1 to 3, in which R₁ and R₂ independently of one another are unsubstituted or hydroxy-, C₁-C₄-alkoxy- or halogen-substituted C₁-C₄-alkyl or C₁-C₄-alkoxy; or
a radical of the formula -N(R₃)R₄, in which R₃ is hydrogen and R₄ is hydrogen, or C₂-C₄-alkanoyl which is further substituted in the alkyl part by C₁-C₄-alkoxy.

6. An azo dye according to any one of claims 1 to 5, in which R₁ and R₂ independently of one another are C₁-C₄-alkoxy; unsubstituted or C₁-C₄-alkoxy-substituted C₁-C₄-alkyl; or amino.

7. An azo dye according to any one of claims 1 to 6, in which R₁ and R₂ independently of one another are methyl; ethyl; methoxy; ethoxy; methoxy- or ethoxy-substituted methyl; or amino.

8. An azo dye according to any one of claims 1 to 7, in which R₁ and R₂ independently of one another are methyl; ethyl; ethoxy; methoxy-substituted methyl; or amino.

9. An azo dye according to any one of claims 1 to 8, in which R₁ and R₂ independently of one another are methyl; ethyl; ethoxy; or methoxy-substituted methyl.

10. An azo dye according to any one of claims 1 to 9, in which R₁ is methyl and R₂ is ethyl.

11. An azo dye according to any one of claims 1 to 10, in which the sulfo group in the azo dye of the formula (1) is bonded in the para-position relative to the azo group.

12. A process for the preparation of an azo dye according to claim 1, which comprises diazotizing an amine of the formula 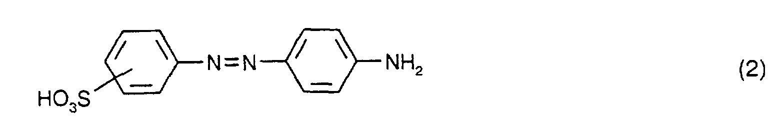 coupling the diazotization product to a coupling component of the formula 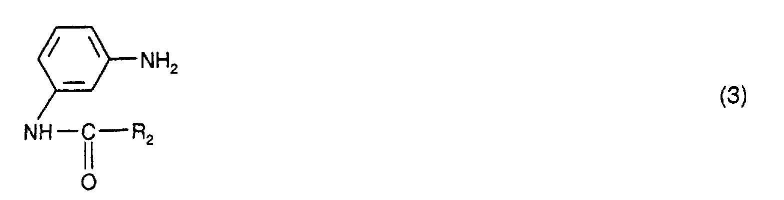 and reacting the resulting reaction product with a compound which introduces the radical of the formula 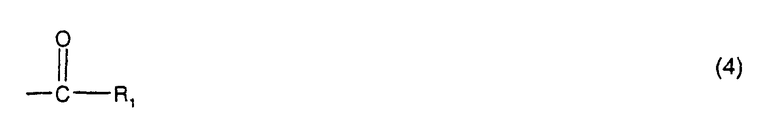 in which
R₁ and R₂ are as defined in claim 1.

13. The use of an azo dye according to any one of claims 1 to 11 or of an azo dye obtained according to claim 12 for dyeing or printing fibre materials containing nitrogen or containing hydroxyl groups.

14. The use according to claim 13 for dyeing or printing natural or synthetic polyamide fibre materials.

## Revendications

1. Colorants azoïques de formule 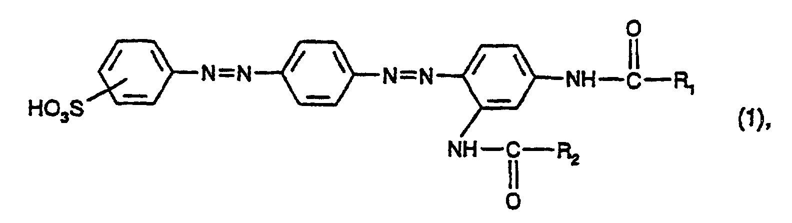 où
R₁ et R₂ représentent, indépendamment l'un de l'autre, des groupes alkyle en C₁-C₄ éventuellement substitué par des substituants hydroxy, alkoxy en C₁-C₄ ou halogène ou alkoxy en C₁-C₄ ;
phényle ou phénoxy éventuellement substitué par des substituants alkyle en C₁-C₄, alkoxy en C₁-C₄ ou halogène ; ou
un reste de formule -N(R₃)R₄, où R₃ et R₄ représentent, indépendamment l'un de l'autre, un atome d'hydrogène, un groupe alkyle en C₁-C₄ ou alcanoyle en C₂-C₄ éventuellement substitué encore dans le fragment alkyle par des substituants hydroxy ou alkoxy en C₁-C₄,
à condition que R₁ et R₂ ne représentent pas simultanément un groupe méthyle.

2. Colorants azoïques selon la revendication 1, caractérisé en ce que R₃ représente un atome d'hydrogène.

3. Colorants azoïques selon la revendication 1 et 2, caractérisés en ce que R₄ représente un atome d'hydrogène ou un groupe alcanoyle en C₂-C₄ substitué encore dans le fragment alkyle par un substituant alkoxy en C₁-C₄.

4. Colorants azoïques selon l'une des revendications 1 à 3, caractérisés en ce que R₃ et R₄ représentent un atome d'hydrogène.

5. Colorants azoïques selon l'une des revendications 1 à 3, caractérisés en ce que R₁ et R₂ représentent, indépendamment l'un de l'autre, un groupe alkyle en C₁-C₄ éventuellement substitué par des substituants hydroxy, alkoxy en C₁-C₄ ou halogène ou alkoxy en C₁-C₄ ; ou
un reste de formule -N(R₃)R₄, où R₃ représente un atome d'hydrogène et R₄ représente un atome d'hydrogène ou un groupe alcanoyle en C₂-C₄ substitué encore dans le fragment alkyle par un substituant alkoxy en C₁-C₄.

6. Colorants azoïques selon l'une des revendications 1 à 5, caractérisés en ce que R₁ et R₂ représentent, indépendamment l'un de l'autre, des groupes alkoxy en C₁-C₄ ; alkyle en C₁-C₄ éventuellement substitué par un substituant alkoxy en C₁-C₄ ; ou amino.

7. Colorants azoïques selon l'une des revendications 1 à 6, caractérisés en ce que R₁ et R₂ représentent, indépendamment l'un de l'autre, des groupes méthyle ; éthyle ; méthoxy ; éthoxy ; méthyle substitué par un substituant méthoxy ou éthoxy ; ou amino.

8. Colorants azoïques selon l'une des revendications 1 à 7, caractérisés en ce que R₁ et R₂ représentent, indépendamment l'un de l'autre, un groupe méthyle ; éthyle ; éthoxy ; méthyle substitué par un substituant méthoxy ; ou amino.

9. Colorants azoïques selon l'une des revendications 1 à 8, caractérisés en ce que R₁ et R₂ représentent, indépendamment l'un de l'autre, un groupe méthyle ; éthyle ; éthoxy ; méthyle substitué par un substituant méthoxy.

10. Colorants azoïques selon l'une des revendications 1 à 9, caractérisés en ce que R₁ représente un groupe méthyle et R₂ un groupe éthyle.

11. Colorants azoïques selon l'une des revendications 1 à 10, caractérisés en ce que le groupe sulfo dans les colorants azoïques de formule (1) est lié à la position para par rapport au groupe azo.

12. Procédé de préparation de colorants azoïques selon la revendication 1, caractérisé en ce qu'on diazote une amine de formule 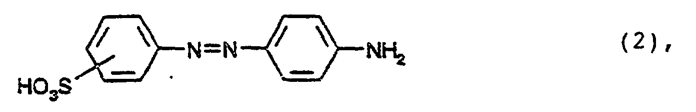 on copule sur un composant de copulation de formule 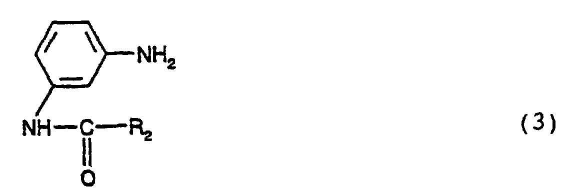 et on fait réagir le produit réactionnel obtenu sur un composé introduisant le reste de formule, 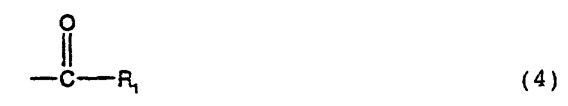 R₁ et R₂ possédant les significations données à la revendication 1.

13. Utilisation des colorants azoïques selon les revendications 1 à 11 ou obtenus selon la revendication 12 pour la teinture ou l'impression de matières fibreuses azotées ou présentant des groupes hydroxyle.

14. Utilisation selon la revendication 13 pour la teinture ou l'impression de matières fibreuses polyamides naturelles ou synthétiques.
